# EUROPÄISCHE PATENTSCHRIFT

(11) **EP 2 198 134 B1**
(45) Veröffentlichungstag und Bekanntmachung des Hinweises auf die Patenterteilung: **02.12.2015**
(21) Anmeldenummer: 08801923.7
(22) Anmeldetag: 09.09.2008
(51) Int. Cl.: F01N 3/08, F01N 9/00, F01N 3/20

(54) **VERFAHREN ZUR VERMINDERUNG DER EMISSION VON STICKSTOFFDIOXID BEI EINEM KRAFTFAHRZEUG MIT EINER MAGER BETRIEBENEN BRENNKRAFTMASCHINE**
METHOD FOR REDUCING EMISSION OF NITROGEN OXIDE IN A MOTOR VEHICLE HAVING AN INTERNAL COMBUSTION LEAN OPERATING ENGINE
PROCÉDÉ POUR RÉDUIRE LES ÉMISSIONS DE DIOXYDE D'AZOTE SUR UN VÉHICULE AUTOMOBILE DOTÉ D'UN MOTEUR À COMBUSTION INTERNE FONCTIONNANT AVEC UN MÉLANGE PAUVRE

(30) Priorität: 28.09.2007 DE 102007046460
(43) Veröffentlichungstag der Anmeldung: 23.06.2010
(73) Patentinhaber: Daimler AG, 70327 Stuttgart (DE)
(72) Erfinder: TRAEBERT, Anke, 70469 Stuttgart (DE); KAMMER, Cyrill, 72574 Bad Urach (DE); KEPPELER, Berthold, 73277 Owen (DE); LAHR, Jochen, 70190 Stuttgart (DE); PAULE, Markus, 71404 Korb (DE); WERQUET, Nicole, 70329 Stuttgart (DE); ZUSCHLAG, Axel, 71394 Kernen (Rommelshausen) (DE)
(74) Vertreter: JENSEN & SON
(86) Internationale Anmeldenummer: PCT/EP2008/007349
(87) Internationale Veröffentlichungsnummer: WO 2009/043425

(56) Entgegenhaltungen:
- EP-A- 1 777 384
- WO-A-2004/022935
- WO-A-2004/061278

## Beschreibung

Die Erfindung betrifft ein Verfahren zur Verminderung der Emission von Stickstoffdioxid bei einem Kraftfahrzeug mit einer mager betriebenen Brennkraftmaschine mit angeschlossenem Abgasreinigungssystem mit einem SCR-Katalysator.

Aus der DE 10 2005 049 655 A1 ist ein Verfahren zur Verminderung der Emission von Stickstoffdioxid (NO₂) bekannt, welches bei einer mager betriebenen Brennkraftmaschine mit einem einen Katalysator mit Stickoxid-Oxidationsaktivität aufweisenden Abgasreinigungssystem angewendet wird. Bei dem Verfahren wird während des Betriebs der Brennkraftmaschine der Anteil von Stoffen variiert, die mit der Oxidation von Stickstoffmonoxid (NO) konkurrieren. Dadurch wird erreicht, dass stromab des Katalysators mit NO-Oxidationsaktivität der NO₂-Gehalt im Abgas eine mit Blick auf eine nachfolgende Abgasnachbehandlung bevorzugte Größe annimmt. Dabei liegt der Hauptaugenmerk auf einer für eine stromab des Katalysators mit NO-Oxidationsaktivität durchgeführte selektive Reduktion von Stickoxiden (NOx) an einem SCR-Katalysator bzw. auf einer Oxidation von an einem Partikelfilter abgelagerten Rußpartikeln. Ein ähnliches Verfahren ist aus der WO2004/022935A1 auch bekannt.

Durch das Verfahren wird zwar vermieden, dass in Bezug auf die genannten nachfolgenden Abgasnachbehandlungsvorgänge ein unnötiger oder nachteiliger Überschuss an NO₂ gebildet wird, jedoch ist eine Abgabe von NOx im Allgemeinen und von NO₂ im Besonderen an die Umwelt nicht zuverlässig auf ein wünschenswertes Ausmaß verringert. Insbesondere ist eine unerwünschte Emission von NOx und insbesondere von NO₂ bei niedrigen Abgastemperaturen nicht zuverlässig vermieden.

Aufgabe der Erfindung ist, ein Verfahren anzugeben, mit welchem eine Verminderung der Stickstoffdioxidemission einer Brennkraftmaschine über einen weiten Betriebsbereich und insbesondere bei diesbezüglich kritischen niedrigen Abgastemperaturen ermöglicht ist.

Diese Aufgabe wird mit einem Verfahren mit den Merkmalen des Anspruchs 1 sowie mit einem Verfahren mit den Merkmalen des Anspruchs 3 gelöst.

Bei dem erfindungsgemäßen Verfahren nach Anspruch 1 wird bei einem SCR-Katalysator, welcher Adsorptionszentren für Stickoxide aufweist, oberhalb einer Einsatztemperatur, bei welcher durch den SCR-Katalysator eine merkliche Reduktion von Stickoxiden mit Ammoniak unter oxidierenden Bedingungen erfolgen kann, diesem ein mit Ammoniak angereichertes Abgas zugeführt.

Der zur Katalysierung einer selektiven NOx-Reduktion unter oxidierenden Bedingungen mittels NH₃ befähigte SCR-Katalysator weist Adsorptionszentren auf, an welchen Stickoxide (NOx) adsorbieren und dadurch dem Abgas entzogen werden können. Diese Fähigkeit zur Adsorption von NOx betrifft die Stickoxide NO und/oder NO₂, wobei eine mögliche Adsorption anderer Stickstoffoxide wie N₂O, N₂O₃, N₂O₄ sowie anderer, insbesondere polarer Stoffe nicht ausgeschlossen ist.

Nachfolgend wird von NOx gesprochen, wenn sowohl Stickstoffmonoxid (NO) als auch eines der anderen genannten Stickstoffoxide betroffen sein können. Hingegen ist bei einem Bezug auf Stickstoffdioxid (NO₂) lediglich dieses Stickstoffoxid betroffen.

Unterhalb der Einsatztemperatur wird erfindungsgemäß das dem SCR-Katalysator zugeführte Abgas mit einem Stoff angereichert, der wenigstens teilweise an diesen Adsorptionszentren des SCR-Katalysators derart adsorbiert, dass eine Adsorption von NOx an diesen Adsorptionszentren gehemmt ist.

Bei der Einrichtung zur Anreicherung des Abgases mit Ammoniak und/oder einem zur Abspaltung von Ammoniak befähigten Reagens handelt es sich bevorzugt um eine Zugabevorrichtung, mit welcher ein extern bereitgestelltes Reduktionsmittel wie Ammoniak (NH₃) Harnstoff, Ammoniumcarbamat oder Ammoniumformiat dem Abgas von außen zugegeben werden kann. Bevorzugt ist eine Zugabevorrichtung für wässrige Harnstofflösung, die in das Abgas verdüst werden kann. Infolge einer Thermolyse und/oder Hydrolyse wird im Abgas bei erhöhten Temperaturen aus dem Harnstoff NH₃ freigesetzt, mit welchem unter oxidierenden Bedingungen eine selektive NOx-Reduktion am SCR-Katalysator erfolgt. Bei der genannten Einrichtung kann es sich jedoch auch um eine in das Abgasreinigungssystem integrierte und von Abgas durchströmte reaktive Einheit handeln, welche abgasintern Ammoniak aus von vornherein im Abgas enthaltenen oder ganz oder teilweise dem Abgas nachträglich hinzu geführten Abgasbestandteilen erzeugen kann. Hierfür kommt in erster Linie eine katalytische Einheit wie beispielsweise ein dem SCR-Katalysator vorgeschalteter Dreiwege- oder Stickoxidspeicherkatalysator infrage, welcher zugeführte oder gespeicherte Stickoxide mittels reduzierend wirkender Abgasbestandteile zu Ammoniak reduzieren kann.

In diesem Zusammenhang ist unter einer Einsatztemperatur des SCR-Katalysators eine Temperatur zu verstehen, oberhalb welcher eine merkliche NOx-Reduktion am SCR-Katalysator mit zugeführtem NH₃ ermöglicht ist. Dabei kann die Einsatztemperatur durch eine Anspringtemperatur des SCR-Katalysators definiert sein, oberhalb welcher der SCR-Katalysator eine merkliche Aktivität zur selektiven NOx-Reduktion mit NH₃ erreicht. Die Einsatztemperatur kann jedoch auch durch eine Zersetzungstemperatur gekennzeichnet sein, oberhalb welcher aus dem zugegebenen Reagens NH₃ in merklichem Maße freigesetzt wird. In beiden Fällen liegen unterhalb der Einsatztemperatur somit die Voraussetzungen für eine selektive NOx-Reduktion mit NH₃ im SCR-Katalysator nicht oder nur in geringem Umfang vor. Mit dem erfindungsgemäßen Verfahren ist sowohl unterhalb als auch oberhalb der Einsatztemperatur eine Verminderung insbesondere von NO₂ ermöglicht.

Von den Erfindern wurde erkannt, dass zumindest bei bestimmten Typen von SCR-Katalysatoren insbesondere Kohlenmonoxid (CO), Kohlendioxid(CO₂), Kohlenwasserstoffe (HC) oder Wasser (H₂O) und/oder andere Stoffe an den Adsorptionszentren für NOx derart adsorbieren können, dass eine NOx-Adsorption an diesen Adsorptionszentren gehemmt ist. Typischerweise ist der SCR-Katalysator derart ausgebildet, dass zumindest bei vergleichsweise niedrigen Temperaturen die maßgeblichen Adsorptionszentren einen oder mehrere der genannten oder weitere Stoffe mit vergleichbarer oder sogar stärkerer Bindungsstärke als NOx adsorptiv binden können. Eine Verhinderung oder zumindest eine starke Verminderung der NOx-Adsorption kann jedoch auch allein dadurch erzielt werden, dass der betreffende Stoff im Vergleich zu NOx in einem deutlichen Überschuss angeboten wird und deshalb eine Belegung der Adsorptionszentren mit diesem Stoff bevorzugt erfolgt.

Von den Erfindern wurde erkannt, dass bei einer Erwärmung des SCR-Katalysators zuvor adsorbiertes und somit angesammeltes NOx bei Erreichen einer Desorptionstemperatur insbesondere in Form von NO₂ freigesetzt wird, wobei hohe Konzentrationswerte auftreten können. Infolge der erfindungsgemäß gehemmten, d.h. gänzlich verhinderten oder stark verminderten Adsorption von NOx wird eine Anreicherung von NOx im SCR-Katalysator vermieden. Eine erhöhte Emission von NO₂ infolge einer Desorption ist daher sowohl bei Erwärmung des SCR-Katalysators über die Desorptionstemperatur als auch unterhalb der Einsatztemperatur unterbunden. Ferner wird durch die erfindungsgemäße Hemmung einer NOx-Adsorption bei niedrigen Temperaturen vermieden, dass infolge einer Reaktion mit im Abgas enthaltenem Wasser eine Bildung von Salpetersäure und/oder Salpetriger Säure im SCR-Katalysator erfolgt, welche einerseits eine Schädigung des SCR-Katalysators oder von Teilen des Abgasreinigungssystems bewirken kann und andererseits bei einer thermischen Desorption durch eine Emission unerwünschter und hochgiftiger nitroser Gase in Erscheinung treten kann. Für eine Verminderung der NOx-Emission insgesamt ist es dabei von Vorteil, wenn für eine Adsorption an den genannten Adsorptionszentren ein Stoff eingesetzt wird, mit welchem dem SCR-Katalysator in einer Tieftemperaturreduktion eine NO₂-Reduktion bzw. allgemein eine NOx-Verminderung auch unterhalb der Einsatztemperatur ermöglicht ist.

In Ausgestaltung des Verfahrens gemäß Anspruch 1 wird zur Verhinderung einer Adsorption von Stickoxiden das Abgas mit Kohlenwasserstoffen angereichert. Besonders bevorzugt ist eine Anreicherung mit niedermolekularen Kohlenwasserstoffen. In Bezug sowohl auf eine wirksame Katalysierung der selektiven NOx-Reduktion mit NH₃ als auch auf eine Blockierung von Adsorptionszentren und/oder einer Tieftemperaturreduktion von NOx mit den zugeführten Kohlenwasserstoffen ist ein SCR-Katalysator besonders geeignet, welcher eine Feststoffsäure enthält. Eine Dotierung mit einem Übergangsmetall wie z.B. Eisen (Fe) oder einem Metall der Platingruppe wie z.B. Platin (Pt) kann zusätzlich vorgesehen sein. Die entsprechenden Adsorptionszentren sind in dabei bevorzugt als Lewis- und/oder Brönstedt-Säurezentren ausgebildet. Das gegebenenfalls vorhandene Übergangs- oder Platinmetallzentrum kann ebenfalls als Adsorptionszentrum für NOx und für Kohlenwasserstoffe wirksam sein. Auch in Bezug auf andere Zusatzstoffe zur Blockade der NOx-Adsorptionszentren kann eine solche Ausführung des SCR-Katalysators vorteilhaft sein.

Die der Erfindung zugrunde liegende Aufgabe wird gemäß Anspruch 3 auch dadurch gelöst, dass bei einer mager betriebenen Kraftfahrzeug-Brennkraftmaschine mit Abgasreinigungssystem mit einem zur Reduktion von Stickoxiden (NOx) mit Ammoniak unter oxidieren Bedingungen befähigten SCR-Katalysator und einer stromauf vom SCR-Katalysator angeordneten Einrichtung zur Anreicherung des Abgases mit Ammoniak und/oder einem zur Abspaltung von Ammoniak befähigten Reagens eine Gesamtemission von Stickoxiden (NOx) des Kraftfahrzeugs unter ein vorgebbares erstes Maß abgesenkt wird, indem dem SCR-Katalysator oberhalb einer Einsatztemperatur ein mit Ammoniak angereichertes Abgas zugeführt wird und der Anteil von Stickstoffdioxid (NO₂) an der Gesamtemission von Stickoxiden (NOx) des Kraftfahrzeugs unter ein vorgebbares zweites Maß abgesenkt wird, indem Stickstoffdioxid (NO₂) mit im SCR-Katalysator eingespeicherten Kohlenwasserstoffen umgesetzt wird.

Bei dem vorgebbaren ersten und zweiten Maß handelt es sich vorzugsweise um eine durch ihre Masse definierte Menge des jeweiligen Stoffs, welche in einer bestimmten vorgegeben Fahrstrecke und/oder in einem vorgegebenen Kollektiv von Fahr- und/oder Betriebszuständen an die Umgebung abgegeben wird.

Die Absenkung der NOx-Gesamtemission erfolgt dabei vorzugsweise überwiegend oder zumindest zu einem erheblichen Teil durch den SCR-Katalysator. Hierfür wird oberhalb von dessen Einsatztemperatur eine Anreicherung des Abgases mit Ammoniak vorgenommen. Dabei wird vorzugsweise Ammoniak und/oder ein zur Abspaltung von Ammoniak befähigten Reagens aus einem externen Vorrat dem Abgas stromauf des SCR-Katalysators zugegeben. Eine Anreicherung des Abgases mit Ammoniak kann jedoch auch durch eine Komponente des Abgasreinigungssystems vorgenommen werden. Zusätzlich kann vorgesehen sein, einen Teil der NOx-Rohemission der Brennkraftmaschine durch einen oder mehrere andere zur NOx-Verminderung befähigte Abgasreinigungseinheiten zu vermindern, welche im Abgasreinigungssystem dem SCR-Katalysator vorzugsweise vorgeschaltet sind.

Zur Verminderung des Anteils von Stickstoffdioxid (NO₂) an der Gesamtemission von Stickoxiden (NOx) wird bevorzugt dem SCR-Katalysator insbesondere unterhalb der Einsatztemperatur ein mit Kohlenwasserstoffen angereichertes Abgas zugeführt. Der SCR-Katalysator ist vorzugsweise derart ausgebildet, dass er zumindest unterhalb der Einsatztemperatur die im Abgas vermehrt vorhandenen Kohlenwasserstoffe adsorbieren und/oder eine Reduktion von NO₂ mit diesen Kohlenwasserstoffen katalysieren kann. Auf diese Weise ist eine Verminderung der Emission von NOx allgemein und insbesondere von NO₂ sowohl bei einer normalen Betriebstemperatur des SCR-Katalysators, als auch unterhalb dieser Temperatur ermöglicht.

Bei normaler Betriebstemperatur, d.h. oberhalb der Einsatztemperatur erfolgt eine NOx-Verminderung durch selektive Reduktion am bzw. im SCR-Katalysator mittels NH₃. Diese ist unterhalb der Einsatztemperatur zwar nicht oder nur in geringem Maß möglich. Die Erfinder haben jedoch erkannt, dass insbesondere unterhalb der Einsatztemperatur durch im SCR-Katalysator eingespeicherte Kohlenwasserstoffe dem SCR-Katalysator zugeführtes und/oder im SCR-Katalysator adsorbiertes NO₂ zu NO und/oder zu N2 umgesetzt werden kann. Dadurch sinkt der Anteil des besonders schädlichen NO₂ an der Gesamtemission. Durch eingespeicherte Kohlenwasserstoffe kann auch, beispielsweise infolge blockierter Reaktions- bzw. Adsorptionszentren, eine heterogen katalysierte NO-Oxidation zu NO₂ vermieden werden, wodurch die NO₂-Emission ebenfalls vermindert wird. Alternativ bzw. parallel kann eine Tieftemperaturreduktion von NOx zu N₂ mit vermehrt im Abgas vorhandenem HC vom SCR-Katalysator katalysiert werden. Vorzugsweise ist der Einsatz eines für die genannten Funktionen optimierten SCR-Katalysators vorgesehen. Durch das erfindungsgemäße Verfahren kann somit auch unterhalb der Einsatztemperatur eine Verminderung der Emission zumindest des NO₂-Anteils von im Abgas enthaltenem NOx erzielt werden.

In weiterer Ausgestaltung des Verfahrens erfolgt die Zuführung von mit Kohlenwasserstoffen angereichertem Abgas zum SCR-Katalysator bei einer Warmlaufphase und/oder bei einer Leerlaufphase und/oder bei einem Schubbetrieb der Brennkraftmaschine. In diesen Betriebszuständen ist die Einsatztemperatur noch nicht erreicht oder es kann eine Abkühlung unter diese auftreten. Damit steht der SCR-Katalysator typischerweise in diesen Betriebsphasen und gegebenenfalls auch einige Zeit nach deren Beendigung für eine selektive NOx-Reduktion mit NH₃ nicht zur Verfügung. Wird in diesen Betriebsphasen zumindest zeitweise das Abgas mit Kohlenwasserstoffen angereichert, so können die oben in Bezug auf eine unerwünschte NOx- bzw. NO₂-Emission genannten Effekte vermieden oder zumindest abgeschwächt werden. Sind oxidationskatalytische Abgasreinigungskomponenten dem SCR-Katalysator vorgeschaltet, so können diese in den genannten Betriebszuständen in Bezug auf eine Oxidation von NO zu NO₂ noch oder bereits aktiv sein, auch wenn der SCR-Katalysator nicht über seiner Einsatztemperatur ist. Infolge der erfindungsgemäßen Anreicherung des Abgases mit Kohlenwasserstoffen ist es ermöglicht, eine adsorptive Anreicherung von stromauf erzeugtem NO₂ im SCR-Katalysator zu verhindern und/oder erzeugtes NO₂ durch eine am SCR-Katalysator katalysierte Reaktion mit den Kohlenwasserstoffen zu NO und/oder zu N₂ umzusetzen und mehr oder weniger unschädlich zu machen.

In weiterer Ausgestaltung des Verfahrens wird eine Anreicherung des Abgases mit Kohlenwasserstoffen beendet und es wird eine Anreicherung des Abgases mit Ammoniak begonnen, wenn ausgehend von einer unterhalb der Einsatztemperatur liegenden Temperatur des SCR-Katalysators die Einsatztemperatur des SCR-Katalysators überschritten wird. Auf diese Weise werden die Dauer der Anreicherungsphase und der Verbrauch an Kohlenwasserstoffen gering gehalten und es ist eine frühzeitige Verminderung von NOx durch selektive Reduktion mittels NH₃ gewährleistet.

In weiterer Ausgestaltung des Verfahrens erfolgt eine Anreicherung des Abgases mit Kohlenwasserstoffen durch eine unvollständige Verbrennung von der Brennkraftmaschine zugeführtem Kraftstoff. Dies wird vorzugsweise durch eine Nacheinspritzung von Kraftstoff in einen Brennraum der Brennkraftmaschine bei insgesamt magerem Luft-Kraftstoffverhältnis realisiert. Die Anreicherung des Abgases mit vorzugsweise niedermolekularen Kohlenwasserstoffen und/oder Kohlenmonoxid kann jedoch auch durch eine Verbrennung mit insgesamt fettem Luft-Kraftstoffverhältnis mit einem integralen fetten LambdaWert von etwa 0,95 bis 0,8 erzielt werden.

In weiterer Ausgestaltung des Verfahrens erfolgt eine Anreicherung des Abgases mit Kohlenwasserstoffen durch eine separate Versorgungseinheit. Die Versorgungseinheit kann beispielsweise als reine Verdampfereinheit zur Verdampfung des von der Brennkraftmaschine genutzten Kraftstoffs ausgebildet sein. Eine Ausführung als Crack-Einheit zum katalytisch unterstützten oder thermischen Cracken, insbesondere mit partieller Oxidation des Kraftstoffs ist jedoch bevorzugt, da mit einer solchen Versorgungseinheit reaktiv und/oder adsorptiv hochwirksame Spezies erzeugt werden können. Dabei ist eine gleichzeitig ablaufende Reformierung mit Erzeugung von Kohlenmonoxid und/oder Wasserstoff vorteilhaft.

In weiterer Ausgestaltung des Verfahrens wird bei einem Abgasreinigungssystem mit einer dem SCR-Katalysator vorgeschalteten oxidationskatalytisch wirksamen Abgasreinigungskomponente, ausgehend von einer unterhalb der Einsatztemperatur liegenden Temperatur des SCR-Katalysators eine Anreicherung des Abgases mit Kohlenwasserstoffen stromauf der oxidationskatalytisch wirksamen Abgasreinigungskomponente beendet, wenn die oxidationskatalytisch wirksame Abgasreinigungskomponente eine merkliche Aktivität zur Oxidation von Kohlenwasserstoffen erreicht. Auf diese Weise ist gewährleistet, dass dem Abgas zugeführte Kohlenwasserstoffe nicht teilweise oder überwiegend oxidiert werden, bevor sie den SCR-Katalysator erreichen. Vorzugsweise wird mittels eines Temperaturfühlers die Temperatur der oxidationskatalytisch wirksamen Abgasreinigungskomponente überwacht und bei Erreichen von deren Anspringtemperatur in Bezug auf eine Oxidation der Kohlenwasserstoffe die Anreicherung beendet. Bei der oxidationskatalytisch wirksamen Abgasreinigungskomponente kann es sich um einen Oxidationskatalysator, einen Dreiwege-Katalysator, einen Stickoxid-Speicherkatalysator und/oder um einen katalytisch beschichteten Partikelfilter handeln.

In weiterer Ausgestaltung des Verfahrens wird die Anreicherung des Abgases mit Kohlenwasserstoffen beendet, wenn das Abgas stromab des SCR-Katalysators einen vorgebbaren Gehalt an Kohlenwasserstoffen und/oder der SCR-Katalysator eine vorgebbare Beladung mit Kohlenwasserstoffen aufweisen. Auf diese Weise wird eine Abgabe von Kohlenwasserstoffen an die Umgebung vermieden. Zur Überwachung des Kohlenwasserstoffgehalts stromab vom SCR-Katalysator kann eine Lambdasonde oder ein anderer gegenüber Kohlenwasserstoffen empfindlicher Sensor eingesetzt werden. Es ist jedoch auch möglich, anhand bekannter Stoffdaten des SCR-Katalysators und der Menge von dem Abgas zugeführten Kohlenwasserstoffen zu ermitteln, zu welchem Zeitpunkt der SCR-Katalysator eine ausreichende Menge von Kohlenwasserstoffen adsorbiert hat. Auf diese Weise kann ebenfalls ein unerwünschter Schlupf von Kohlenwasserstoffen vermieden werden.

In weiterer Ausgestaltung des Verfahrens wird ein SCR-Katalysator auf Zeolithbasis eingesetzt. Zeolithkatalysatoren haben sich als besonders geeignet zur Katalysierung einer selektiven Stickoxidreduktion mittels NH₃ erwiesen und können überdies gegebenenfalls über eine mehr oder weniger starke Fähigkeit zur Adsorption von Kohlenwasserstoffen und Stickoxiden verfügen.

Vorteilhafte Ausführungsformen der Erfindung sind nachfolgend unter Bezug auf eine Zeichnung beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

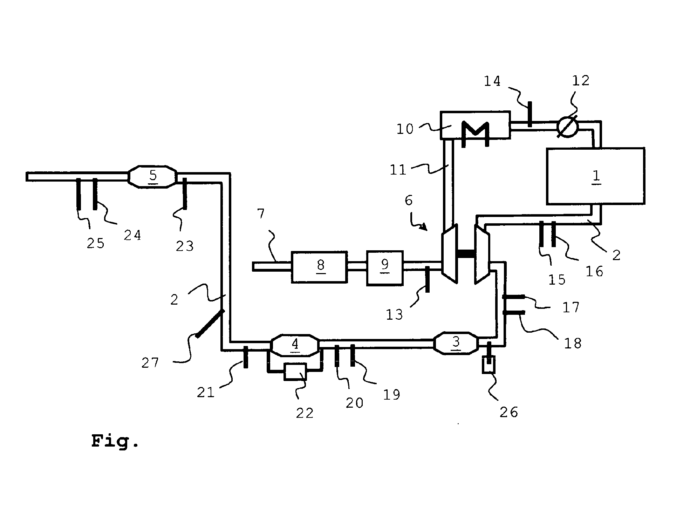

Dabei zeigt die einzige Figur ein schematisches Blockbild einer Brennkraftmaschine mit einer beispielhaften Ausführungsform eines zugeordneten Abgasreinigungssystems.

Die Brennkraftmaschine 1 ist vorzugsweise als luftverdichtende Brennkraftmaschine, nachfolgend vereinfacht als Dieselmotor bezeichnet, ausgebildet. Das vom Dieselmotor 1 ausgestoßene Abgas wird von einer Abgasleitung 2 aufgenommen und durchströmt nacheinander einen Oxidationskatalysator 3, einen Partikelfilter 4 und einen SCR-Katalysator 5. Stromauf des Oxidationskatalysators 3 ist eine Versorgungseinheit 26 zur Anreicherung des Abgases mit HC bzw. einem Brennstoff vorgesehen. Eine Zufuhr von HC bzw. eines Brennstoffs wie beispielsweise Dieselkraftstoff kann zur Aufheizung des Abgases bzw. von in der Abgasleitung 2 installierten reinigungswirksamen Bauteilen vorgesehen sein. Eine Aufheizung des Abgases durch exotherme Oxidation von zugegebenem Brennstoff bzw. HC durch den Oxidationskatalysator 3 kommt insbesondere bei einer Regeneration des Partikelfilters 4 durch Rußabbrand in Betracht. Eine Feststellung der Notwendigkeit einer solchen Regeneration kann modellbasiert und/oder mit Hilfe eines dem Partikelfilter 4 zugeordneten Differenzdrucksensors 22 erfolgen, über dessen Ausgangssignal eine kritische Partikelbeladung des Partikelfilters 4 ermittelt werden kann. Eine Abgasaufheizung kann jedoch auch in Verbindung mit einem Kaltstart oder Warmlauf des Dieselmotors 1 und/oder generell dann vorgesehen sein, wenn ein unerwünscht niedriges Abgastemperaturniveau insbesondere eingangsseitig des SCR-Katalysators 5 festgestellt wird. Durch den Oxidationskatalysator 3 ist außerdem eine Erhöhung des NO₂-Anteils von im Abgas enthaltenem NOx ermöglicht. Dadurch ist einerseits eine Oxidation von im Partikelfilter 4 abgelagertem Ruß bei Abgastemperaturen unterhalb von 500 °C, als auch ein verbesserter NOx-Umsatz im SCR-Katalysator 5 bei normalen Betriebsbedingungen ermöglicht. Auf Möglichkeiten zur Verminderung bzw. Vermeidung einer Emission von NO₂ bei Bedingungen, welche für einen Umsatz von einmal erzeugtem NO₂ ungünstig sind, wird weiter unter näher eingegangen.

Dem Dieselmotor 1 ist ferner ein Abgasturbolader 6 zugeordnet, dessen Turbine vom Abgasstrom angetrieben wird und dessen Verdichter über eine Ansaugluftleitung 7 angesaugte Luft über eine Luftzufuhrleitung 11 dem Dieselmotor 1 zuführt. Zur Einstellung der dem Dieselmotor 1 zugeführten Luftmenge ist in der Luftzufuhrleitung 11 eine Drosselklappe 12 angeordnet. Zur Reinigung der Ansaugluft bzw. zur Messung der Ansaugluftmenge sind ein Luftfilter 8 bzw. ein Luftmassenmesser 9 in der Ansaugluftleitung 7 angeordnet. Ein in der Luftzufuhrleitung 11 angeordneter Ladeluftkühler 10 dient zur Kühlung der verdichteten Ansaugluft. Für den Ladeluftkühler 10 kann eine nicht dargestellte, vorzugsweise regelbare Umgehung vorgesehen sein. Vorzugsweise verfügt der Dieselmotor 1 außerdem über eine nicht dargestellte Abgasrückführeinrichtung, über welche der Abgasleitung 2 entnommenes Abgas der dem Dieselmotor 1 zugeführten Verbrennungsluft mengenmäßig regulierbar beigemischt werden kann. Für rückgeführtes Abgas kann ebenfalls ein Kühler vorgesehen sein. Mit einer bedarfsgerechten Einstellung von Ladeluft- und Abgasrückführmenge sowie deren Kühlung ist eine Steuerung der Kraftstoff-Verbrennung in den Brennräumen des Dieselmotors 1 mit Blick auf einen optimalen Kraftstoffverbrauch aber auch mit Blick auf eine Einstellung von NOx- und Rußrohemissionswerten sowie mit Blick auf eine gegebenenfalls gewünschte Anhebung der Abgastemperatur ermöglicht. Eine weitere Einstellmöglichkeit der genannten Betriebsgrößen ist durch eine bedarfsweise durchgeführte Ansaugluftdrosselung mittels Betätigung der Drosselklappe 12 ermöglicht.

Stromauf des SCR-Katalysators 5 ist eine Zugabevorrichtung mit einem Dosierventil 27 zur Zugabe eines Reduktionsmittels in das Abgas angeordnet. Die Versorgung des Dosierventils 27 mit dem Reduktionsmittel erfolgt aus einem hier nicht dargestellten Behälter. Nachfolgend wird davon ausgegangen, dass es sich bei dem Reduktionsmittel um wässrige Harnstofflösung handelt. Es kann jedoch auch ein anderes Reduktionsmittel eingesetzt werden, insbesondere ein Reduktionsmittel, welches Ammoniak (NH₃) in freier oder chemisch gebundener Form enthält. Die Harnstofflösung wird bedarfsgerecht dem Abgas über das Dosierventil 27 zudosiert. Im heißen Abgas wird durch Thermolyse und/oder Hydrolyse NH₃ freigesetzt, welches selektiv bezüglich einer NOx-Reduktion wirkt. Als hierfür hochwirksamer Katalysator ist ein SCR-Katalysator 5 auf Zeolith-Basis oder auf Basis von V₂O₅/W₂O₃/TiO₂ vorgesehen, welcher für seinen Einsatzzweck der heterogen katalytisierten selektiven NOx-Reduktion mit NH₃ typischerweise Adsorptionszentren für NOx und NH₃ aufweist. Der SCR-Katalysator kann als Vollextrudat oder als Schichtkatalysator ausgebildet sein.

Zur Steuerung des Betriebs des Abgasreinigungssystems sowie des Dieselmotors 1 ist eine nicht dargestellte Steuereinrichtung vorgesehen. Zur Erfüllung der vorgesehenen Steuerfunktionen erhält die Steuereinrichtung Informationen über Betriebszustandsgrößen des Dieselmotors 1. Dies können z.B. Informationen über das abgegebene Drehmoment oder die Drehzahl sein. Die Steuereinrichtung umfasst vorzugsweise eine Recheneinheit und eine Speichereinheit sowie eine Ein-Ausgabeeinheit. Dadurch ist die Steuereinrichtung in der Lage, komplexe Signalverarbeitungsvorgänge vorzunehmen und den Betrieb des Dieselmotors 1 sowie des Abgasreinigungssystems zu erfassen und zu steuern bzw. zu regeln. Hierfür notwendige Kennfelder sind vorzugsweise in der Speichereinrichtung abgelegt, wobei auch eine adaptive Anpassung der Kennfelder vorgesehen sein kann. Die Kennfelder betreffen hauptsächlich die maßgeblichen Zustandsgrößen des Abgases, wie Massenstrom, Rohemission, Temperatur in Abhängigkeit der Betriebszustandsgrößen des Dieselmotors 1 wie Last, Drehzahl, Luftverhältniszahl etc. Ferner sind Kennfelder für die maßgeblichen Zustandsgrößen des Oxidationskatalysators 3, des Partikelfilters 4 und des SCR-Katalysators 5 vorgesehen. Hinsichtlich des SCR-Katalysators 5 betreffen diese Kennfelder insbesondere den NOx-Umsatz und die NH₃- bzw. HC-Speicherfähigkeit in Abhängigkeit von den hierfür maßgebenden Einflussgrößen.

Die Erfassung der Betriebszustände des Dieselmotors 1 sowie des Abgasreinigungssystems und der zugeordneten Einheiten erfolgt vorzugsweise mittels geeigneter Sensoren. Beispielhaft sind Drucksensoren 13 und 15 für einen Druck vor dem Verdichter und einen Druck vor der Turbine des Turboladers 6 sowie Temperatursensoren 14, 16, 18, 19, 21, 23 und 24 für jeweils eine Temperatur nach dem Ladeluftkühler 10, vor der Turbine, vor dem Oxidationskatalysator 3, vor und nach dem Partikelfilter 4 sowie vor und nach dem SCR-Katalysator 5 dargestellt. Weitere Sensoren, insbesondere zur Erfassung von Abgaskomponenten können ebenfalls vorgesehen sein. Beispielsweise sind ein Lambdasensor 17 sowie ein NOx-Sensor 20 für den NOx-Gehalt im Abgas vorgesehen. Insbesondere ist ein Abgassensor 25 ausgangsseitig des SCR-Katalysators 5 vorgesehen, der eine Empfindlichkeit gegenüber NOx und NH₃ oder gegenüber HC aufweist. Der NOx-Sensor 20 kann auch stromab des Partikelfilters 4 angeordnet sein, befindet sich jedoch vorzugsweise stromauf des Dosierventils 27. Die Signale der Sensoren werden von der Steuereinrichtung verarbeitet, so dass die wesentlichen Zustandsgrößen jederzeit vorliegen und der Betriebspunkt des Dieselmotors 1 falls notwendig so verändert werden kann, dass ein optimaler Betrieb des Abgasreinigungssystems ermöglicht ist. Die geschilderte Funktionalität kann natürlich im Rahmen der Erfindung durch zusätzliche Abgasreinigungskomponenten, wie beispielsweise einen Stickoxidspeicherkatalysator und/oder einen Hydrolysekatalysator vor dem SCR-Katalysator 5 erweitert bzw. verbessert werden. Besonders vorteilhaft ist es, einen Stickoxidspeicherkatalysator stromauf des Partikelfilters 4 und/oder zwischen dem Partikelfilter 4 und dem SCR-Katalysator 5 vorzusehen. In fetten Betriebsphasen kann mit einer Regeneration des Stickoxidspeicherkatalysators zuvor eingespeichertes NOx teilweise zu Ammoniak reduziert und auf diese Weise das Abgas mit Ammoniak angereichert werden. Gegebenenfalls kann in einer derartigen Ausgestaltung sogar auf eine externe Zufuhr von Harnstoff verzichtet werden. Ferner kann ein weiterer Oxidationskatalysator stromab des SCR-Katalysators 5 vorgesehen sein, durch welchen Restanteile von NH₃ und/oder HC im Abgas entfernt werden können. Ebenfalls möglich sind Änderungen der Sensorik in Bezug auf Art, Anzahl und Anordnung der Sensoren.

Die erläuterten Ausführungsformen eines Abgasreinigungssystems haben sich als besonders vorteilhaft in Bezug auf eine wirksame Entfernung der wesentlichen Abgasschadstoffe, insbesondere in Bezug auf NOx und Partikel erwiesen. Beispielsweise kann eine Gesamtemission von NOx unter ein vorgebbares Maß von 80 mg je Fahrkilometer in einem Kollektiv von Betriebszuständen durch eine Reduktion von Stickoxiden im Abgasreinigungssystem, insbesondere im SCR-Katalysator 5 erreicht werden. Hierzu wird oberhalb der Einsatztemperatur das Abgas mit Ammoniak angereichert, vorzugsweise indem über das Dosierventil 27 Harnstofflösung bedarfsgerecht dem Abgas zugegeben wird. Bevorzugt wird durch ein Beladungsmodell oder sensorgesteuert eine betriebszustandsabhängige Beladung des SCR-Katalysators mit Ammoniak derart eingestellt, dass im Abgas enthaltene Stickoxide in dem erforderlichen Umfang vermindert werden können. Bei temperaturbedingt oder aufgrund anderer Umstände verminderter Leistungsfähigkeit des SCR-Katalysators kann durch Einstellung von geeigneten Betriebsbedingungen gemäß den oben genannten Möglichkeiten die NOx-Rohemission des Dieselmotors derart vermindert werden, dass die vorgegebenen NOx-Emissionswerte eingehalten werden können.

Bei einigen Betriebszuständen, beispielsweise bei und im Anschluss an einen Kaltstart bzw. bei länger andauernden Fahrzuständen mit geringer Motorlast (Schub- oder Leerlaufbetrieb) können indessen kritisch niedrige Abgastemperaturen auftreten, bei welchen maßgebliche Stoffumsetzungen nicht oder nicht mit der ausreichenden Geschwindigkeit ablaufen können. Dies kann zu einer unerwünschten Emission von Schadstoffen führen. Für eine selektive katalytische NOx-Reduktion am SCR-Katalysator 5 und eine thermolytische bzw. hydrolytische Freisetzung von NH₃ aus Harnstoff ist beispielsweise das Überschreiten einer bestimmten Einsatztemperatur erforderlich, welche typischerweise im Bereich von etwa 170 °C bis 250 °C liegt. Für andere katalytische Umsetzungen im Abgasreinigungssystem ist ein Überschreiten einer Anspringtemperatur der jeweiligen Abgasnachbehandlungseinheit erforderlich. Beispielsweise wird vom Oxidationskatalysator 3 NO bei niedrigeren Temperaturen (ca. 200 °C) oxidiert als Kohlenwasserstoffe (ca. 250 °C).

Nachfolgend wird auf vorteilhafte Maßnahmen eingegangen, welche eine Verringerung der Emission insbesondere von NO₂ auch bei den genannten kritischen Bedingungen ermöglichen. Durch die nachfolgend näher erläuterten Maßnahmen ist einerseits eine weiter verbesserte Reduktion der NOx-Gesamtemission als auch ein Verringerung des NO₂-Anteils der NOx-Gesamtemission unter ein vorgebbares oder vorgegebenes Maß von beispielsweise 10 mg je Fahrkilometer oder einen Anteil von 10 % der NOx-Gesamtemission ermöglicht.

Die Erfinder haben erkannt, dass eine unerwünscht hohe Emission von NO₂ insbesondere bei Temperaturen unterhalb der Einsatztemperatur hauptsächlich auf zwei Effekte zurückzuführen ist. Zum einen kann im Abgas enthaltenes NOx vom SCR-Katalysator 5 adsorbiert werden und reichert sich somit im SCR-Katalysator 5 an. Bei einer Erwärmung über eine katalysatorspezifische Desorptionstemperatur hinaus, wird adsorbiertes NOx aufkonzentriert und überwiegend in Form von NO₂ abgegeben. Zum anderen kann von vornherein im Abgas enthaltenes NOx bzw. NO₂ unter Bedingungen, bei welchen keine Adsorption erfolgt oder kein Umsatz mit Ammoniak möglich ist, den SCR-Katalysator 5 ungehindert passieren.

Die Erfinder haben erkannt, dass das resultierende NO₂-Emissionsproblem durch eine Anreicherung des Abgases mit Kohlenwasserstoffen stromauf des SCR-Katalysators 5 gelöst werden kann. Vorteilhaft ist dabei eine Anreicherungskonzentration von etwa 100 ppm bis etwa 10000 ppm, bezogen auf (HC)₃. Eine Anreicherungskonzentration von etwa 200 ppm bis 5000 ppm ist bevorzugt. Besonders bevorzugt ist eine Anreicherungskonzentration im Bereich zwischen 500 ppm und 2000 ppm. Vermehrt im Abgas vorhandenes HC kann zum einen an Adsorptionszentren des SCR-Katalysators 5 derart adsorbieren, dass eine Adsorption von NOx verhindert oder zumindest stark vermindert ist. Dadurch wird eine Anreicherung von NOx im SCR-Katalysator 5 und eine entsprechende NO₂-Desorptionsspitze vermieden. Zum anderen werden infolge der Adsorption intramolekulare Bindungen geschwächt, weshalb adsorbierte Kohlenwasserstoffe eine hohe Reaktionsfähigkeit aufweisen und auch bei Sauerstoffüberschuss und niedrigen Temperaturen im Abgas enthaltenes NO₂ oder koadsorbiertes NOx zumindest zu NO, großteils sogar zu unschädlichem N₂ reduzieren können. Eine solche Reduktion ist jedoch, obschon typischerweise weniger stark ausgeprägt, auch mit in der Gasphase enthaltenen HC möglich.

Wie die Erfinder festgestellt haben, ist für eine hohe Wirksamkeit in dem genannten Sinn der Einsatz eines Materials für den SCR-Katalysator 5 vorteilhaft, welches sowohl Lewis- als auch Brönstedt-Säurezentren aufweist. Vorzugsweise wird ein Katalysator auf Zeolith-Basis, beispielsweise ein Zeolith vom Beta-, ZSM5-, MFI-, oder Mordenit-Typ eingesetzt. Es kann jedoch auch ein anderer Zeolith eingesetzt werden. Bevorzugt ist ein Zeolith mit einer Hammet-Acidität von weniger als -3, insbesondere von weniger als -5. Der Zeolith kann in seiner H-Form oder ionenausgetauscht mit einem Übergangsmetall wie z.B. Mangan (Mn), Eisen (Fe), Kupfer (Cu) oder einem Metall der Platingruppe wie z.B. Platin (Pt), Palladium (Pd), Rhodium (Rh) eingesetzt werden. Dabei können sowohl die Säurezentren als auch die Metallzentren als Adsorptionszentren und/oder als katalytische Zentren wirksam sein. Insbesondere zur temperaturabhängigen Blockierung eines von Pt gebildeten Adsorptionszentrums kann alternativ oder zusätzlich auch eine Anreicherung des Abgases mit CO vorgesehen sein.

Es ist vorgesehen, die Anreicherung des Abgases mit HC in Bezug auf Zugabezeit und/oder Zugabemenge derart zu steuern, dass eine unerwünschte HC-Desorption bzw. HC-Emission vermieden wird. Hierzu wird zweckmäßig die dem Abgas zugegebene Menge aufsummiert und mit vorgehaltenen Sollwerten verglichen. Dabei ist es zweckmäßig, die Sollwerte temperatur- und durchsatzabhängig in vorab für den entsprechenden SCR-Katalysator 5 ermittelten Kennfeldern vorzuhalten. Ist eine in Bezug auf Desorption oder Schlupf kritische HC-Beladung des SCR-Katalysators 5 erreicht, so wird die Anreicherung des Abgases beendet. Anstelle einer rechnerischen oder modellgestützten Steuerung der HC-Beladung kann auch eine messtechnische Kontrolle mittels eines gegenüber HC empfindlichen Abgassensors stromab des SCR-Katalysators 5 vorgesehen sein. Generell ist im Rahmen der erfindungsgemäßen Vorgehensweise zur Verminderung von NO₂-Emissionen bei niedrigen Betriebstemperaturen vorgesehen, die HC-Anreicherung des Abgases spätestens dann zu beenden und auf eine für den normalen Betrieb vorgesehene NOx-Verminderung durch NH₃-Anreicherung umzuschalten, wenn die Einsatztemperatur des SCR-Katalysators 5 erreicht bzw. überschritten wird. Für eine bedarfsgerechte Zugabe von Harnstoff über das Dosierventil 27 zum Zweck der NH₃-Anreicherung sollte gewährleistet sein, dass die Abgastemperatur über Harnstoffzersetzungstemperatur liegt.

Die HC-Anreicherung des Abgases kann durch eine hierfür geeignete Einstellung von Betriebsparametern des Dieselmotors 1 derart erfolgen, dass in einem oder mehreren Brennräumen des Dieselmotors eine unvollständige Kraftstoffverbrennung abläuft. Vorzugsweise wird ein Zeitpunkt für eine Kraftstoffnacheinspritzung derart gewählt, dass der nacheingespritzte Kraftstoff in die ausklingende oder bereits abgeklungene Verbrennung der zum Antrieb genutzten Haupteinspritzung erfolgt. Je nachdem, wie Beginn und Dauer der Nacheinspritzung gewählt werden, kann eine Anreicherung des Abgases mit mehr oder weniger stark gecrackten bzw. teilverbrannten Kohlenwasserstoffen erreicht werden.

Die HC-Anreicherung des Abgases kann alternativ oder zusätzlich auch durch die separate Versorgungseinheit 26 vorgenommen werden. Die HC-Anreicherung des Abgases stromauf des Oxidationskatalysators 3 wird vorzugsweise abgeschaltet, wenn der Oxidationskatalysator 3 oder gegebenenfalls auch der Partikelfilter 4 eine merkliche Aktivität zur HC-Oxidation entwickelt, d.h., wenn die entsprechende Anspringtemperatur erreicht ist. Die vor dem Oxidationskatalysator 3 angeordnete Versorgungseinheit 26 kann jedoch auch mit Vorteil dadurch zur Aufheizung des Abgases eingesetzt werden, dass oberhalb der Anspringtemperatur HC zugeführt und unter Wärmefreisetzung am Oxidationskatalysator 3 und/oder am Partikelfilter 4 oxidiert wird. Dies ist insbesondere in Verbindung mit einer thermischen Regeneration des Partikelfilters 4 vorgesehen, kann jedoch auch bei anderen Betriebszuständen erfolgen, wenn eine Aufheizung des Abgasreinigungssystems erwünscht ist.

Es kann auch vorgesehen sein, alternativ oder zusätzlich eine entsprechende Versorgungseinheit zwischen dem Partikelfilter 4 und dem SCR-Katalysator 5 anzuordnen. Diese Ausführungsform ermöglicht es, dem SCR-Katalysator 5 mit HC angereichertes Abgas auch dann zuzuführen, wenn der Oxidationskatalysator 3 bzw. der Partikelfilter 4 bereits ihre Anspringtemperatur erreicht haben.

Generell ist es bevorzugt, wenn die Betriebsparameter des Dieselmotors bzw. der HC-Versorgungseinheit derart eingestellt werden, dass HC mit weniger als zehn Kohlenstoffatomen, besonders bevorzugt mit weniger als acht Kohlenstoffatomen erzeugt werden. Diese HC-Fraktionen haben sich als besonders wirksam sowohl in Bezug auf eine Adsorption auf auch von NOx bevorzugten Adsorptionszentren des SCR-Katalysators 5, als auch in Bezug auf eine unterhalb der Einsatztemperatur katalysierte Reduktion von NO bzw. NO₂ erwiesen. Vorteilhaft ist es auch, wenn bei einem Warmlauf-, Leerlauf- und/oder Schubbetrieb begleitend zur HC-Anreicherung des Abgases eine Betriebsparametereinstellung für den Dieselmotor 1 derart vorgenommen wird, dass eine rasche Erwärmung des SCR-Katalysators 5 über die Einsatztemperatur erfolgt bzw. eine geringe NOx-Rohemission resultiert. Für ein rasches Aufwärmen können beispielsweise eine Abgasrückführung und/oder eine Kühlung von rückgeführtem Abgas und/oder eine Ladeluftkühlung bis zum Erreichen einer bestimmten Kühlmitteltemperatur abgeschalten werden. Für eine geringe NOx-Rohemission kann der Dieselmotor 1 mit einer vergleichsweise hohen Abgasrückführrate, d.h. mit annähernd oder vollständig geöffnetem Abgasrückführvententil betrieben werden. Für einen niedrigen Basiswert der NOx-Rohemission ist es außerdem generell vorteilhaft, wenn der Dieselmotor 1 mit einem niedrigen Verdichtungsverhältnis betrieben wird. Bei einem Dieselmotor ist ein Verdichtungsverhältnis von weniger als 16 bevorzugt.

Für eine niedrige NO₂-Emission ist es außerdem vorteilhaft, wenn begleitend zu den genannten Maßnahmen für den Oxidationskatalysator 3 und/oder den Partikelfilter 4 eine Beschichtung gewählt wird, welche eine geringe NO-Oxidationsaktivität aufweist. Dies kann beispielsweise durch einen vergleichsweise geringen Pt-Gehalt von weniger als 70 g/ft³, vorzugsweise von weniger als 50 g/ft³ und besonders bevorzugt von weniger als 30 g/ft³ erreicht werden. Für eine Aufrechterhaltung der HC-Oxidationsaktivität kann ein entsprechend höherer Pd-Gehalt vorgesehen sein, wobei ein Pd/Pt-Verhältnis von wenigstens 0,2 bevorzugt und von wenigstens 0,5 besonders bevorzugt ist.

Zur Einhaltung eines vorgebbaren Maßes für die NO₂-Emission kann auch eine messtechnische NO₂-Erfassung endseitig im Abgassystem, beispielsweise durch den Abgassensor 25 vorgesehen sein. In Abhängigkeit der erfassten NO₂-Emissionswerte bzw. des Sensorsignals können die oben geschilderten Maßnahmen einzeln oder in Kombination ergriffen werden. Insbesondere zur Verminderung der NO₂-Emission im Anschluss an einen Kaltstart kann es außerdem vorgesehen sein, dass bei außer Betrieb gesetztem Fahrzeug bzw. Dieselmotor 1 Kohlenwasserstoffe, beispielsweise durch kurzeitiges Einblasen auf den SCR-Katalysator 5 geleitet werden, so dass sie dort adsorbieren können. Auf diese Weise wird erreicht, dass der SCR-Katalysators 5 bereits zu Beginn eines Kaltstarts mit HC vorbelegt ist. Dadurch wird unmittelbar mit dem Motorstart beginnend eine Emission von NOx und insbesondere von NO₂ zumindest vermindert.

## Patentansprüche

1. Verfahren zur Verminderung einer Emission von Stickstoffdioxid (NO₂) bei einem Kraftfahrzeug mit einer mager betriebenen Brennkraftmaschine (1) mit angeschlossenem Abgasreinigungssystem mit einem zur Reduktion von Stickoxiden (NOx) mit Ammoniak unter oxidieren Bedingungen befähigten SCR-Katalysator (5) und einer stromauf vom SCR-Katalysator (5) angeordneten Einrichtung zur Anreicherung des Abgases mit Ammoniak und/oder einem zur Abspaltung von Ammoniak befähigten Reagens, wobei bei einem SCR-Katalysator (5) mit Adsorptionszentren für Stickoxide (NOx) in dem Verfahren
- oberhalb einer Einsatztemperatur, bei welcher der SCR-Katalysator (5) Stickoxide (NOx) mit Ammoniak unter oxidierenden Bedingungen in merklichem Umfang reduzieren kann, dem SCR-Katalysator (5) ein mit Ammoniak angereichertes Abgas zugeführt wird und
- unterhalb der Einsatztemperatur das dem SCR-Katalysator (5) zugeführte Abgas mit Kohlenwasserstoffen angereichert wird, die wenigstens teilweise an den Adsorptionszentren für Stickoxide (NOx) des SCR-Katalysators (5) derart adsorbiert, dass eine Adsorption von Stickoxiden (NOx) an diesen Adsorptionszentren gehemmt ist.

2. Verfahren nach Anspruch 1,
**dadurch gekennzeichnet, dass**
die Zuführung von mit Kohlenwasserstoffen angereichertem Abgas zum SCR-Katalysator (5) bei einer Warmlaufphase und/oder bei einer Leerlaufphase und/oder bei einem Schubbetrieb der Brennkraftmaschine (1) erfolgt.

3. Verfahren nach Anspruch 1 oder 2,
**dadurch gekennzeichnet, dass**
eine Anreicherung des Abgases mit Kohlenwasserstoffen beendet wird und eine Anreicherung des Abgases mit Ammoniak begonnen wird, wenn ausgehend von einer unterhalb der Einsatztemperatur liegenden Temperatur des SCR-Katalysators (5) die Einsatztemperatur des SCR-Katalysators (5) überschritten ist.

4. Verfahren nach einem der Ansprüche 1 bis 3,
**dadurch gekennzeichnet, dass**
eine Anreicherung des Abgases mit Kohlenwasserstoffen durch eine unvollständige Verbrennung von der Brennkraftmaschine (1) zugeführtem Kraftstoff erfolgt.

5. Verfahren nach einem der Ansprüche 1 bis 4,
**dadurch gekennzeichnet, dass**
eine Anreicherung des Abgases mit Kohlenwasserstoffen durch eine separate Versorgungseinheit (26) erfolgt.

6. Verfahren nach einem der Ansprüche 1 bis 5,
**dadurch gekennzeichnet, dass**
bei einem Abgasreinigungssystem mit einer dem SCR-Katalysator (5) vorgeschalteten oxidationskatalytisch wirksamen Abgasreinigungskomponente (3; 4), ausgehend von einer unterhalb der Einsatztemperatur liegenden Temperatur des SCR-Katalysators (5) eine Anreicherung des Abgases mit Kohlenwasserstoffen stromauf der oxidationskatalytisch wirksamen Abgasreinigungskomponente (3; 4) beendet wird, wenn die oxidationskatalytisch wirksame Abgasreinigungskomponente (3; 4) eine merkliche Aktivität zur Oxidation von Kohlenwasserstoffen erreicht.

7. Verfahren nach einem der Ansprüche 1 bis 6,
**dadurch gekennzeichnet, dass**
die Anreicherung des Abgases mit Kohlenwasserstoffen beendet wird, wenn das Abgas stromab des SCR-Katalysators (5) einen vorgebbaren Gehalt an Kohlenwasserstoffen und/oder der SCR-Katalysator (5) eine vorgebbare Beladung mit Kohlenwasserstoffen aufweisen.

8. Verfahren nach einem der Ansprüche 1 bis 7,
**dadurch gekennzeichnet, dass**
ein SCR-Katalysator (5) auf Zeolithbasis eingesetzt wird.

## Claims

1. Method for reducing an emission of nitrogen dioxide (NO₂) in a motor vehicle having a lean-operating internal combustion engine (1), comprising a connected exhaust gas purification system with an SCR catalytic converter (5) capable of reducing nitrogen oxides (NOₓ) with ammonia in oxidising conditions, and with a device located upstream of the SCR catalytic converter (5) for enriching the exhaust gas with ammonia and/or with a reagent capable of separating ammonia, wherein, in an SCR catalytic converter (5) with adsorption centres for nitrogen oxides (NOₓ), in the method,
- above an application temperature at which the SCR catalytic converter (5) can reduce nitrogen oxides (NOₓ) with ammonia in oxidising conditions to a noticeable extent, an exhaust gas enriched with ammonia is fed to the SCR catalytic converter (5), and,
- below the application temperature, the exhaust gas fed to the SCR catalytic converter (5) is enriched with hydrocarbons which are at least partially adsorbed at the adsorption centres for nitrogen oxides (NOₓ) of the SCR catalytic converter (5) in such a way that an adsorption of nitrogen oxides (NOₓ) is inhibited at these adsorption centres.

2. Method according to claim 1,
**characterised in that**
exhaust gas enriched with hydrocarbons is fed to the SCR catalytic converter (5) in a warm-up phase and/or in an idling phase and/or in a deceleration phase of the internal combustion engine (1).

3. Method according to claim 1 or 2,
**characterised in that**
an enrichment of the exhaust gas with hydrocarbons is ended and an enrichment of the exhaust gas with ammonia is started if, starting from a temperature of the SCR catalytic converter (5) below the application temperature, the application temperature of the SCR catalytic converter (5) is exceeded.

4. Method according to any of claims 1 to 3,
**characterised in that**
the exhaust gas is enriched with hydrocarbons by an incomplete combustion of fuel fed to the internal combustion engine (1).

5. Method according to any of claims 1 to 4,
**characterised in that**
the exhaust gas is enriched with hydrocarbons by a separate supply unit (26).

6. Method according to any of claims 1 to 5,
**characterised in that**
in an exhaust gas purification system with an oxidation-catalytically active exhaust gas purification component (3; 4) located upstream of the SCR catalytic converter (5), starting from a temperature of the SCR catalytic converter (5) below the application temperature, an enrichment of the exhaust gas with hydrocarbons upstream of the oxidation-catalytically active exhaust gas purification component (3; 4) is ended if the oxidation-catalytically active exhaust gas purification component (3; 4) reaches a noticeable activity in the oxidation of hydrocarbons.

7. Method according to any of claims 1 to 6,
**characterised in that**
the enrichment of the exhaust gas with hydrocarbons is ended if the exhaust gas downstream of the SCR catalytic converter (5) has a presettable hydrocarbon content and/or if the SCR catalytic converter (5) has a presettable hydrocarbon loading.

8. Method according to any of claims 1 to 7,
**characterised in that**
an SCR catalytic converter (5) based on zeolite is used.

## Revendications

1. Procédé de réduction d'une émission de dioxyde d'azote (NO₂) pour un véhicule automobile équipé d'un moteur à combustion interne (1) fonctionnant à l'aide d'un mélange pauvre comportant un système d'épuration des gaz d'échappement raccordé à un catalyseur à réduction sélective catalytique (5) destiné à réduire l'oxyde d'azote (NOx) au moyen d'ammoniac dans des conditions d'oxydation et un dispositif disposé en amont du catalyseur à réduction sélective catalytique (5) destiné à enrichir le gaz d'échappement en ammoniac et/ou un réactif destiné à séparer l'ammoniac, pour le catalyseur à réduction sélective catalytique (5) doté de centres d'adsorption pour l'oxyde d'azote (NOx) selon le procédé
- au-dessus d'une température d'utilisation, selon laquelle le catalyseur à réduction sélective catalytique (5) pouvant réduire l'oxyde d'azote au moyen d'ammoniac dans des conditions d'oxydation dans une mesure appréciable, un gaz d'échappement enrichi en ammoniac étant amené au catalyseur à réduction sélective catalytique (5) et
- en-dessous de la température d'utilisation le gaz d'échappement amené au catalyseur à réduction sélective catalytique (5) étant enrichi en hydrocarbures, qui au moins en partie sont adsorbés dans les centres d'adsorption pour l'oxyde d'azote (NOx) du catalyseur à réduction sélective catalytique (5) de telle manière qu'une adsorption d'oxyde d'azote (NOx) soit freinée au niveau desdits centres d'adsorption.

2. Procédé selon la revendication 1, **caractérisé en ce que** l'amenée de gaz d'échappement enrichi en hydrocarbures au catalyseur à réduction sélective catalytique (5) s'effectue au moment d'une phase de montée en température et/ou d'une phase de ralenti et/ou d'un mode de poussée du moteur à combustion interne (1).

3. Procédé selon la revendication 1 ou 2, **caractérisé en ce qu'**un enrichissement du gaz d'échappement en hydrocarbures est achevé et un enrichissement du gaz d'échappement en ammoniac débute lorsqu'à partir d'une température du catalyseur à réduction sélective catalytique (5) se trouvant en-dessous de la température d'utilisation est dépassée.

4. Procédé selon l'une quelconque des revendications 1 à 3, **caractérisé en ce qu'**un enrichissement du gaz d'échappement en hydrocarbures s'effectue par une combustion incomplète du carburant amené par le moteur à combustion interne (1).

5. Procédé selon l'une quelconque des revendications 1 à 4, **caractérisé en ce qu'**un enrichissement du gaz d'échappement en hydrocarbures s'effectue par une unité d'alimentation (26) séparée.

6. Procédé selon l'une quelconque des revendications 1 à 5, **caractérisé en ce que** pour un système d'épuration de gaz d'échappement doté d'un composant d'épuration de gaz d'échappement (3, 4) à activité catalytique d'oxydation monté en amont du catalyseur à réduction sélective catalytique (5), à partir d'une température du catalyseur à réduction sélective catalytique (5) se trouvant en-dessous de la température d'utilisation, un enrichissement du gaz d'échappement en hydrocarbures en amont du composant d'épuration de gaz d'échappement (3, 4) à activité catalytique d'oxydation s'achève lorsque le composant d'épuration de gaz d'échappement (3, 4) à activité catalytique d'oxydation atteint une activité perceptible d'oxydation des hydrocarbures.

7. Procédé selon l'une quelconque des revendications 1 à 6, **caractérisé en ce que** l'enrichissement du gaz d'échappement en hydrocarbures se termine lorsque le gaz d'échappement en aval du catalyseur à réduction sélective catalytique (5) présente une teneur prédéfinie en hydrocarbures et/ou lorsque le catalyseur à réduction sélective catalytique (5) présente une charge prédéfinie en hydrocarbures.

8. Procédé selon l'une quelconque des revendications 1 à 7, **caractérisé en ce qu'**un catalyseur à réduction sélective catalytique (5) à base de zéolithe est utilisé.
